# DEMANDE DE BREVET EUROPEEN

(11) **EP 0 540 379 A1**
(43) Date de publication de la demande: **05.05.1993**
(21) Numéro de dépôt: 92402672.7
(22) Date de dépôt: 29.09.1992
(51) Int. Cl.: H02H 3/33

(54) **Disjoncteur différentiel centralisé**

(30) Priorité: 31.10.1991 FR 9113442
(71) Demandeur: SCHLUMBERGER INDUSTRIES S.A., F-92120 Montrouge (FR)
(72) Inventeur: Chiffert, Alain, F-91300 Massy (FR)
(74) Mandataire: Dupont, Henri

(57) **Abrégé**

- Ce disjoncteur comprend des moyens de traitement qui lui permettent d'être sensible au courant différentiel actif.
- Le disjoncteur peut ainsi être monté très en amont des charges installées sur le réseau et présenter une sensibilité élevée sans être perturbé par la nature éventuellement capacitive de ces charges.

## Description

La présente invention concerne un disjoncteur différentiel comportant un premier capteur, propre à produire un signal de courant différentiel représentatif de la valeur nette d'un courant utilisé par une charge électrique; un second capteur, propre à produire un signal de tension représentatif de la tension appliquée à cette charge; des moyens de traitement fonctionnellement reliés à ces capteurs pour produire un signal utile dépendant des signaux de courant différentiel et de tension; des moyens d'accumulation et de comparaison pour comparer à un seuil prédéterminé une valeur intégrée du signal utile et produire un signal de déclenchement lorsque cette valeur dépasse ce seuil; et des moyens de déconnexion, sensibles au signal de déclenchement, pour déconnecter la charge à l'apparition d'un tel signal de déclenchement.

Un tel dispositif est par exemple connu par le brevet européen 0 034 031, qui décrit un disjoncteur différentiel intégré à un compteur d'électricité résidentiel et essentiellement destiné à prévenir la fraude.

Bien que ce brevet antérieur décrive en outre la possibilité d'utiliser un tel disjoncteur pour assurer la protection des personnes, la pratique a montré la difficulté de donner au seuil du signal de déclenchement une valeur telle que la protection puisse être assurée correctement sans qu'il en résulte des déclenchements intempestifs du disjoncteur dans le cas d'utilisation normale de charges de nature capacitive sur le réseau électrique.

Dans ce contexte, le but de la présente invention est de proposer des moyens permettant d'améliorer le fonctionnement des disjoncteurs différentiels placés très en amont des charges, et par exemple au niveau du compteur d'électricité.

A cette fin, le dispositif de l'invention est essentiellement caractérisé en ce que les moyens de traitement du disjoncteur comprennent un détecteur de polarité propre à produire un signal représentatif de la polarité de la tension, et des moyens sensibles à ce signal de polarité pour produire, en tant que signal utile, le signal de courant différentiel affecté d'un signe correspondant à cette polarité.

L'invention concerne également un procédé de protection différentielle comprenant les opérations consistant à : produire un signal de courant différentiel représentatif de la valeur nette d'un courant utilisé par une charge électrique; produire un signal de tension représentatif de la tension appliquée à cette charge; produire un signal utile obtenu par combinaison des signaux de courant différentiel et de tension; accumuler le signal utile pendant un certain intervalle de temps; comparer la valeur cumulée ainsi obtenue à un seuil prédéterminé; produire un signal de déclenchement lorsque cette valeur dépasse ce seuil; et déconnecter la charge à l'apparition d'un tel signal de déclenchement, ce procédé étant essentiellement caractérisé en ce que la production du signal utile comprend les opérations consistant à détecter la polarité de la tension, et à produire, en tant que signal utile, le signal de courant différentiel affecté d'un signe correspondant à cette polarité.

D'autres caractéristiques et avantages de l'invention ressortiront clairement de la description qui en est faite ci-après, à titre indicatif et nullement limitatif, en référence aux dessins annexés, parmi lesquels:
- La figure 1 est un schéma d'un premier mode de réalisation possible de l'invention;
- La figure 2 est un schéma d'un second mode de réalisation possible de l'invention;
- La figure 3 est un schéma d'un troisième mode de réalisation possible de l'invention.

Les mêmes chiffres de référence sont utilisés sur les différentes figures pour désigner des éléments identiques.

Sur ces figures, 1 et 2 désignent respectivement le conducteur actif et le conducteur de neutre d'un réseau électrique dont le neutre est relié à la terre.

Le dispositif comprend un capteur de courant différentiel 3, comportant un noyau magnétique 3a entourant les conducteurs actif et neutre 1 et 2, et un bobinage 3b délivrant une tension représentative du courant net utilisé par la charge 6 raccordée aux conducteurs 1 et 2, donc représentative de la différence, normalement nulle, des courants circulant sur les conducteurs 1 et 2.

Le dispositif comprend par ailleurs un capteur de tension 4 constitué par exemple par un diviseur résistif 4a, 4b, délivrant à la borne 4c une tension représentative de la tension entre les conducteurs 1 et 2.

Un circuit d'alimentation 5 est branché entre les conducteurs 1 et 2 pour délivrer toutes les tensions nécessaires au fonctionnement du dispositif.

Un détecteur de polarité, constitué par un comparateur 7 comparant au potentiel de terre le potentiel disponible sur la borne 4c, commande un commutateur 8 qui, en fonction de l'état du comparateur 7, applique une tension constante Vo ou son inverse -Vo à l'entrée 9a d'un multiplieur 9.

Ce multiplieur 9, recevant par ailleurs entre ses entrées 9b, 9c, la tension disponible aux bornes du bobinage 3b, produit entre ses sorties 9d, 9e, une tension représentant le courant différentiel détecté par le capteur 3 mais affecté d'un signe représentatif de la polarité de la tension entre les conducteurs 1 et 2.

La tension de sortie du multiplieur 9 est convertie, par un convertisseur tension-fréquence 10, en impulsions que ce dernier délivre sur sa sortie 10a à un accumulateur numérique 11, susceptible d'être périodiquement remis à zéro par application d'un signal R.

L'accumulateur numérique 11 est relié à une chaîne d'amplification 12 susceptible de commander des organes de déconnexion de manière telle que la charge 6 soit isolée des conducteurs 1 et 2 dès que le contenu de l'accumulateur 11 atteint un nombre prédéterminé.

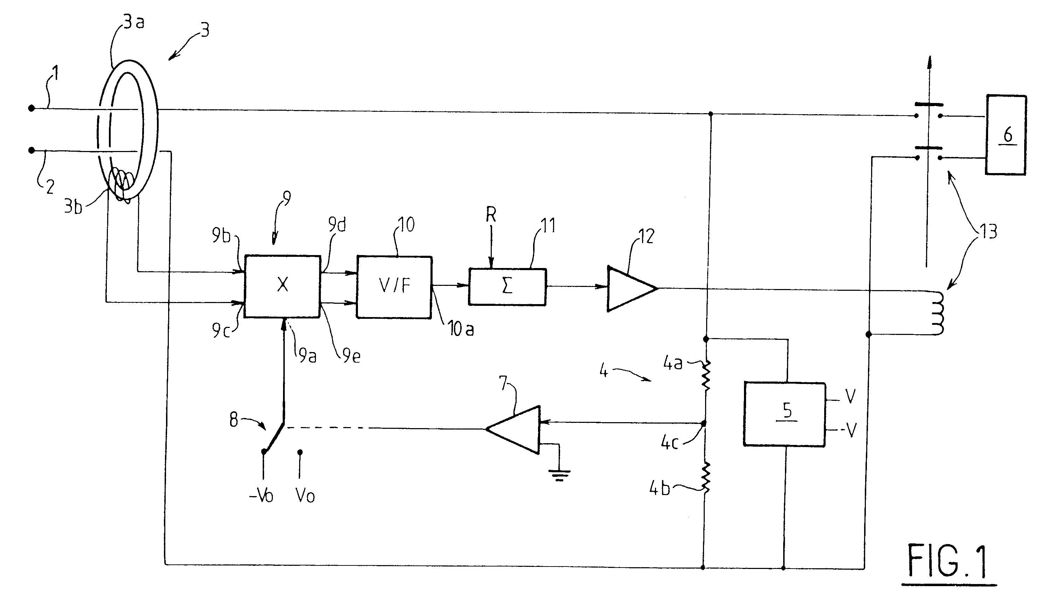

Ainsi, bien que la figure 1 présente des similitudes avec la figure 1 du brevet EP 0 0340 031, qui est incorporé ici par référence y compris dans ses renvois à l'art antérieur, le dispositif de l'invention s'en distingue par le fait que le signal utile est constitué par un signal de courant différentiel actif, et non par un signal d'énergie.

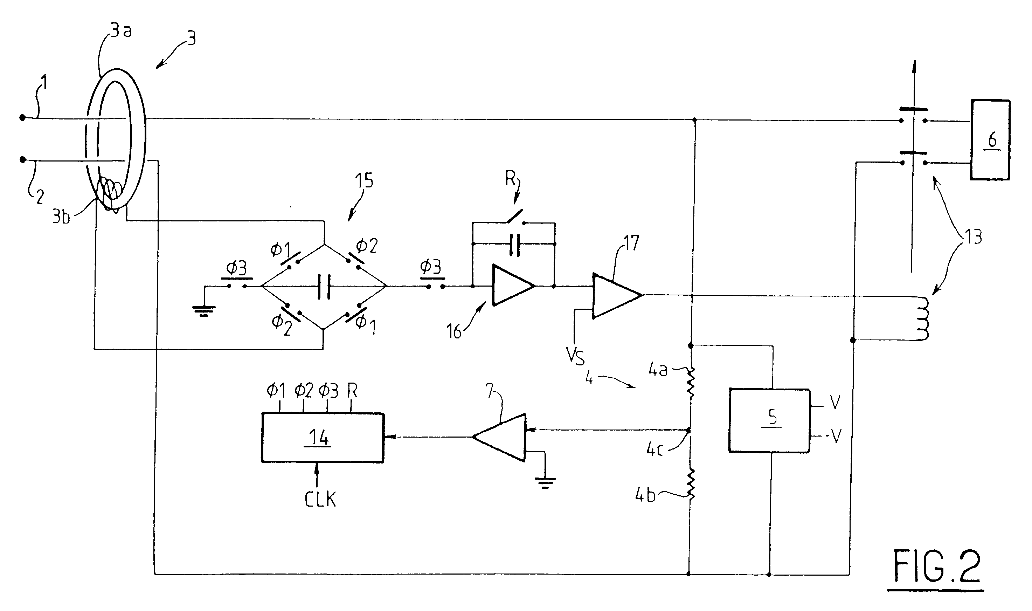

La figure 2 représente un second mode de réalisation de l'invention, dans lequel le comparateur 7 pilote un circuit logique 14 recevant par ailleurs un signal d'horloge CLK et produisant sur des sorties correspondantes, des signaux logiques Phi 1, Phi 2, Phi 3, et R.

Le signal Phi 3 est périodiquement à l'état haut et à l'état bas, les signaux Phi 1 et Phi 2, semblables au signal Phi 1, ne sont pas recouvrants avec lui, et les signaux Phi 1 et Phi 2 ne sont jamais ensemble à l'état haut.

Plus précisément, le ciruit logique 14 produit périodiquement, en fonction de l'état du comparateur 7, donc en fonction de la polarité de la tension entre les conducteurs 1 et 2, les séquences de signaux Phi 1, Phi 3, Phi 1, Phi 3, etc. ou Phi 2, Phi 3, Phi 2, Phi 3, etc., le signal R étant produit à une fréquence sensiblement plus basse.

Les signaux Phi 1, Phi 2 et Phi 3 sont destinés à commander les interrupteurs (repérés par les symboles correspondants) d'un pont à capacité commutée 15 raccordé au bobinage 3b, l'un des interrupteurs Phi 3 raccordant l'une des bornes de la capacité à la terre et l'autre interrupteur Phi 3 raccordant l'autre borne de cette capacité à un intégrateur 16.

L'agencement du pont 15 et de l'intégrateur 16 est ainsi tel que la charge accumulée par ce dernier est formée par un signal instantané représentatif du courant différentiel détecté par le capteur 3, mais affecté d'un signe représentatif de la polarité de la tension entre les conducteurs 1 et 2.

Un comparateur 17 compare à une tension Vs la charge accumulée sur l'intégrateur 16 et commande les organes de déconnexion dès que cette charge dépasse la valeur limite Vs.

L'intégrateur 16 est périodiquement remis à zéro, à une fréquence dépendant du seuil Vs choisi, par fermeture d'un interrupteur commandé par la sortie R du circuit logique 14 et court-circuitant la capacité de cet intégrateur.

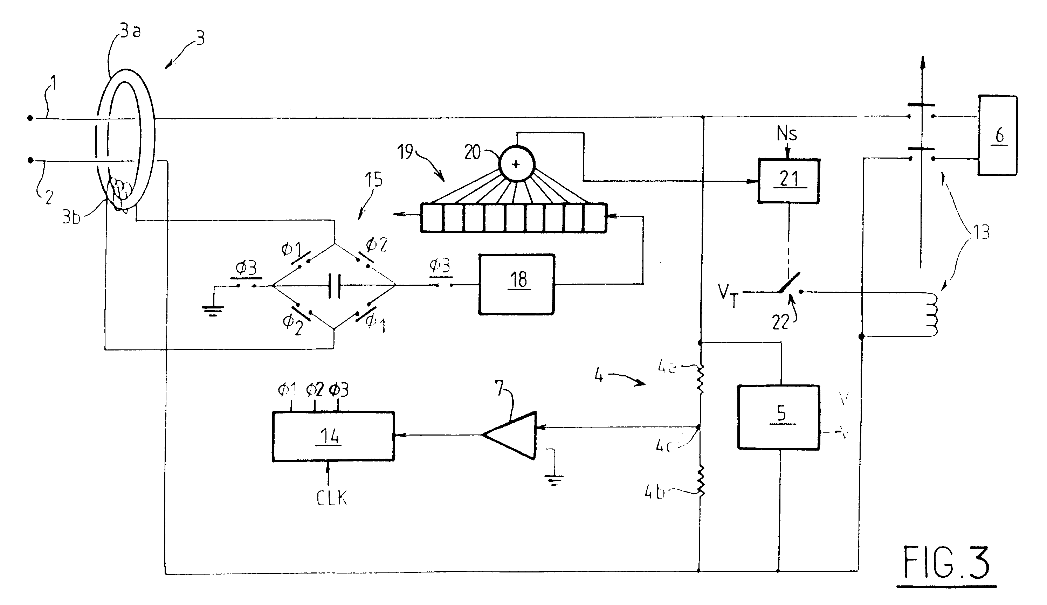

La figure 3 représente un troisième mode de réalisation de l'invention, relativement proche de celui qui vient d'être décrit.

Au lieu d'utiliser un simple intégrateur périodiquement remis à zéro, le dispositif de la figure 3 comprend un convertisseur sigma-delta 18 dont les bits de sortie sont envoyés dans un registre à décalage 19.

Les bits présents à tout moment dans le registre 19 sont sommés par un additionneur 20 et la somme numérique obtenue est adressée à un comparateur numérique 21, qui la compare à un seuil numérique Ns prédéterminé.

En cas de dépassement du seuil, le comparateur 21 ferme un interrupteur 22 qui permet aux organes de déconnexion 13 d'être activés par une tension Vt.

## Revendications

1. Disjoncteur différentiel comportant un premier capteur (3), propre à produire un signal de courant différentiel représentatif de la valeur nette d'un courant utilisé par une charge électrique (6); un second capteur (4), propre à produire un signal de tension représentatif de la tension appliquée à cette charge; des moyens de traitement (7-10, 14, 15, 18) fonctionnellement reliés à ces capteurs pour produire un signal utile dépendant des signaux de courant différentiel et de tension; des moyens d'accumulation (11, 16, 19, 20) et de comparaison (12, 17, 21) pour comparer à un seuil prédéterminé une valeur intégrée du signal utile et produire un signal de déclenchement lorsque cette valeur dépasse ce seuil; et des moyens de déconnexion (13), sensibles au signal de déclenchement, pour déconnecter la charge à l'apparition d'un tel signal de déclenchement, caractérisé en ce que ces moyens de traitement comprennent un détecteur de polarité (7) propre à produire un signal représentatif de la polarité de la tension, et des moyens (8, 9, 14, 15) sensibles à ce signal de polarité pour produire, en tant que signal utile, le signal de courant différentiel affecté d'un signe correspondant à cette polarité.

2. Procédé de protection différentielle comprenant les opérations consistant à : produire un signal de courant différentiel représentatif de la valeur nette d'un courant utilisé par une charge électrique; produire un signal de tension représentatif de la tension appliquée à cette charge; produire un signal utile obtenu par combinaison des signaux de courant différentiel et de tension; accumuler le signal utile pendant un certain intervalle de temps; comparer la valeur cumulée ainsi obtenue à un seuil prédéterminé; produire un signal de déclenchement lorsque cette valeur dépasse ce seuil; et déconnecter la charge à l'apparition d'un tel signal de déclenchement, caractérisé en ce que la production du signal utile comprend les opérations consistant à détecter la polarité de la tension, et à produire, en tant que signal utile, le signal de courant différentiel affecté d'un signe correspondant à cette polarité.
